# EUROPÄISCHE PATENTSCHRIFT

(11) **EP 1 897 904 B1**
(45) Veröffentlichungstag und Bekanntmachung des Hinweises auf die Patenterteilung: **03.07.2013**
(21) Anmeldenummer: 07113991.9
(22) Anmeldetag: 08.08.2007
(51) Int. Cl.: C08G 18/28, C08G 18/79, C08L 75/06, C08J 9/00

(54) **Verwendung von Urethan- oder Harnstoffgruppen enthaltenden Polyethern zur Stabilisierung von Polyurethanschäumen**
Use of polyethers containing urethane or urea groups for stabilising polyurethane foams
Utilisation de groupes d'uréthane ou d'urée contenant des polyéthers destinés à la stabilisation de mousses de polyuréthane

(30) Priorität: 08.09.2006 DE 102006042338
(43) Veröffentlichungstag der Anmeldung: 12.03.2008
(73) Patentinhaber: Evonik Goldschmidt GmbH, 45127 Essen (DE)
(72) Erfinder: Ferenz, Michael, 45147, Essen (DE); Eilbracht, Christian, Dr., 44627, Herne (DE); Esselborn, Jutta, 45147, Essen (DE); Herrwerth, Sascha, Dr., 45134, Essen (DE); Platte, Gabriele, 44581, Castrop-Rauxel (DE)

(56) Entgegenhaltungen:
- EP-A- 0 061 058
- EP-A- 0 301 307
- GB-A- 1 045 175

## Beschreibung

Die Erfindung betrifft die Verwendung von neuartigen Schaumstabilisatoren zur Herstellung von Polyurethan- und/oder Polyisocyanuratschäumen.

Polyurethanhartschäume werden in vielfältigen Anwendungen, zum Beispiel zur thermischen Isolierung, zur Energieabsorption und zur Schallabsorption genutzt. Bei der technischen Herstellung von Polyurethanschäumen werden Schaumstabilisatoren als Prozesshilfsmittel verwendet. Die Eigenschaften des gebildeten Schaums hängen in besonderem Maße von der Struktur und der chemischen Zusammensetzung des verwendeten Schaumstabilisators ab. Diese emulgieren die verwendeten Rohstoffe, stabilisieren den Schaumstoff während des Herstellungsprozesses und ermöglichen die Ausbildung eines homogenen Schaumstoffes mit gleichmäßiger Porenstruktur, gewünschter Zellfeinheit und Offenzelligkeit.

Als Schaumstabilisatoren werden im Allgemeinen Polysiloxan-Polyoxyalkylen-Blockmischpolymerisate verwendet. Diese Stabilisatoren haben hohe Wirksamkeit und lassen sich durch geeignete Auswahl der Struktur und der Zusammensetzung dem Verschäumungssystem und dem Verschäumungsverfahren anpassen. Der Siloxangehalt dieser Blockmischpolymerisate führt allerdings in Polyurethanschaumstoffen zu einer deutlichen Verschlechterung des Brandverhaltens im Sinne einer negativen Beeinflussung der Entflammbarkeit. Ferner enthalten diese siliconbasierten Stabilisatoren aufgrund der Herstellungsweise stets einen erheblichen Anteil an niedermolekularen, flüchtigen zyklischen und linearen Siloxanen, die bei der späteren Anwendung des Schaumes unerwünschte Wirkungen wie einen signifikanten Beitrag zur Emission ("Fogging" - "VOC") zeigen können. Des Weiteren wurde beobachtet, dass die Oberflächen der erhaltenen Schaumstoffe bei Verwendung siliziumorganischer Stabilisatoren schlecht benetzbar sind, wodurch nachfolgende Oberflächenbehandlungen, wie etwa eine Lackierung und das Auftragen mehrerer Schaumstofflagen erschwert werden.

Man hat deshalb versucht, siliziumfreie Stabilisatoren herzustellen, die diese Nachteile nicht aufweisen. Si-freie Schaumstabilisatoren wurden bereits mehrfach in der Patentliteratur erwähnt. Neben einfachen Tensiden, z. B. alkoxylierten Derivaten des Nonylphenols (US-5 236 961), alkoxylierten Fettalkoholen (EP-A-0 343 463), Fettsäureestern und -amiden (DE-A-19 521 351), wurden auch Polyether beschrieben, deren Wirksamkeit auf dem Vorhandensein von Butylenoxid-Einheiten beruhen soll (WO-A-95/16721). Als Starter werden OH-Verbindungen verschiedener Funktionalität, aber auch Amine (Ethylendiamin, Ammoniak und Ethanolamin), genannt.

Ebenfalls Si-frei sind Stabilisatoren auf der Basis partiell oder vollständig fluorierter Verbindungen, wie z.B. in US-A-4 356 273 beschrieben. Nach einem weiteren Vorschlag werden der Polyol- und Perfluoranteil des Moleküls jeweils über Ether-, Amin-, Amid- oder Sulfonamidgruppen gekoppelt.

In der DE-A-2 240 350 ist ein Verfahren zur Herstellung von Si-freien Stabilisatoren beschrieben, die durch radikalische Polymerisation von N-Vinylpyrrolidon sowie Mischungen aus N-Vinylpyrrolidon und Dibutylmaleat oder N-Vinylpyrrolidon, Dibutylmaleat und Vinylacetat in polyfunktionellen Polyetherpolyolen hergestellt wurden.

In der DE-A-25 00 017 und der US-4 091 030 werden Si-freie Stabilisatoren beschrieben, die durch radikalische Polymerisation von cyclischen, stickstoffhaltigen Monomeren (N-Vinylamiden) und einem Ester einer ungesättigten Dicarbonsäure in polyfunktionellen Polyetherpolyolen hergestellt werden.

Überraschenderweise wurde gefunden, dass Urethan- oder Harnstoffgruppen enthaltende Polyether in der Lage sind, als Schaumstabilisatoren zu agieren.

Ein Gegenstand der Erfindung ist die Verwendung von Urethan- oder Harnstoffgruppen enthaltenden Polyethern als Schaumstabilisatoren, erhalten durch die Umsetzung von
A. mindestens einem Isocyanat mit
B.
   (a) mindestens einem hydrophilen Polyether, der statistisch mindestens eine OH- und/oder NH₂- und/oder NH-Funktion trägt und
   (b) mindestens einem hydrophoben Polyether, der statistisch mindestens eine OH- und/oder NH₂- und/oder NH-Funktion trägt und gegebenenfalls
   (c) weiteren Verbindungen, die mindestens eine OH-und/oder NH₂- und/oder NH-Funktion und/oder andere isocynatreaktive Gruppen wie Carbonsäure- oder Epoxid-Funktionen tragen,
mit der Maßgabe, dass mindestens ein Isocyanat A. ≥ difunktionell ist.

Ziel der Umsetzung der oben aufgeführten Verbindungen ist die Darstellung von Produkten, bei denen die hydrophoben Polyether mit den hydrophilen Polyethern verknüpft werden.

Bei der Umsetzung von Isocyanaten mit Alkoholen oder Aminen bilden sich die entsprechenden Urethan- oder Harnstoffderivate. Es bilden sich bei der Umsetzung der oben aufgeführten Komponenten Verbindungen in Form von Gemischen, deren Verteilung durch die Reaktionsführung aber auch durch statistische Gesetze bestimmt wird.

Geeignete mehrfachfunktionelle Isocyanate können sowohl aromatisch als auch aliphatisch sein. Beispiele sind Methylendiphenylisocyanat (MDI), Toluol-Diisocyanat (TDI), 1,6-Hexamethylendiisocyanat, 1-isocyanato-3,5,5-trimethyl-1,3-isocyanatomethylcyclohexan (IPDI) oder Polymethylen-diphenylisocyanat (PMDI). Des Weiteren eignen sich auch trifunktionelle und multifunktionelle Isocyanate die zum Beispiel unter den Handelsnamen Desmodur® N 100 und Desmodur® N 3600 erhältlich sind. In Kombination mit mehrfachfuntionellen Isocyanaten lassen sich auch monofunktionelle Isocyanate im Reaktionsgemisch insbesondere zur Steuerung der Polarität und Molekulargewichtsverteilung nutzen.

Als hydrophile Polyether werden hier solche Polyether bezeichnet, bei denen mehr als 60 mol-% der Alkoxy-Einheiten Ethylenoxid-Einheiten sind. Als hydrophobe Polyether werden hier solche Polyether bezeichnet, bei denen maximal 45 mol-% der Alkoxy-Einheiten Ethylenoxid-Einheiten sind.

Geeignete Polyether können durch Umsetzung eines Starters, der bevorzugt ein Alkohol, ein Amin oder ein Alkanolamin ist, durch Anlagerung von Monomeren gewonnen werden. Startalkohole können z.B. Wasser, Methanol, Ethanol, 1-Butanol, Bisphenol-A, 2-Aminoethanol, Ethylenglykol, Propylenglykol, Glycerin, Oligo- und Polyglycerine, 1,3-Dihydroxypropan, 1,4-Dihydroxybutan, 1,6-Dihydroxyhexan, 1,2,4-Trihydroxybutan, 1,2,6-Trihydroxyhexan, 1,1,1-Trimethylolpropan, Pentaerytritol, Oligomere des Pentaerytritols, Polycaprolacton, Xylitol, Arabitol, Sorbitol, Mannitol, Ethylendiamin, Ammoniak, 1,2,3,4-Tetrahydroxybutan, Rizinusöl oder Fruktose sein.

Die erfindungsgemäß verwendeten Polyglycerine sind zum einen lineare Verbindungen der allgemeinen Formel

HO-CH₂-CH(OH)-CH₂-O-[CH₂-CH(OH)-CH₂-O]ₙ-H

worin
- n: 1 bis 9, vorzugsweise 1 bis 6, insbesondere 1 bis 3, speziell 1 und 2 bedeutet.

Darüber hinaus können die verwendeten Polyglycerine auch verzweigt sein und cyclische Anteile enthalten. Sie enthalten etwa 0 bis 5 Gew.-% Glycerin, 15 bis 40 Gew.-% Diglycerin, 30 bis 55 Gew.-% Triglycerin, 10 bis 25 Gew.-% Tetraglycerin, 0 bis 10 Gew.-% höhere Oligomere. Die erfindungsgemäß bevorzugt verwendeten Polyglycerine enthalten 15 bis 35 Gew.-% Diglycerin, 38 bis 52 Gew.-% Triglycerin, 15 bis 25 Gew.-% Tetraglycerin, < 10 Gew.-% höhere Oligomere und < 2 Gew.-% cyclische Verbindungen. Besonders bevorzugt werden Polyglycerine, die im statistischen Mittel Diglycerin enthalten, verwendet.

Als Monomere geeignet sind zum Beispiel Ethylenoxid, Propylenoxid, Verbindungen aus der Gruppe Tetrahydrofuran, 1,2-Epoxybutan (n-Butylenoxid), 2,3-Epoxybutan (iso-Butylenoxid), sowie Dodecyloxid. Dabei kann die Verteilung der Monomeren beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen oder graduell verteilt sind. Solche Polyether können statistisch angeordnet sein oder eine Blockstruktur haben.

Geeignete hydrophile Polyether, die ein oder mehrere aktive Wasserstoffatome tragen, lassen sich mit Formel (I) beschreiben

(R¹)ₐ[R²[(E)_{c}-(P)_{d}-R³]_{b}]ₑ (I)

wobei
- R¹: bei a = 1, e-funktuionelle nicht reaktive Anteile eines Initiators,
- R²: unabhängig voneinander O, NR⁴, NH oder N,
Eeine Ethoxy-Funktion, vorzugsweise der Rest -(CH₂-CH₂-O),
- P: gleiche oder verschiedene Alkoxyfunktion(en) mit mindestens drei Kohlenstoffatomen,
- R³: gleiche oder verschiedene Reste aus der Gruppe H, -C_{f}H_{2f}-N(R⁴)H und -C_{f}H_{2f}-NH₂,
- R⁴: gleiche oder verschiedene Alkyl- oder Arylfunktionen mit 1 bis 20 Kohlenstoffatomen, bevorzugt Methyl, Ethyl oder Phenyl,
- a: 0 oder 1,
- b: 1, 2 oder 3,
- c: 10 bis 500, vorzugsweise 15 bis 400, insbesondere 20 bis 300,
- d: 0 bis 330, vorzugsweise 0 bis 200, insbesondere 0 bis 100,
- e: 1 bis 10, vorzugsweise 2 bis 8, insbesondere 2 bis 4,
- f: 2 bis 5,
sind, mit der Maßgabe, dass
- c: > 0,6 (c + d), ist.

Geeignete hydrophobe Polyether die ein oder mehrere aktive Wasserstoffatome tragen, lassen sich ebenfalls mit Formel (I) beschreiben,
wobei
- c: 0 bis 400, vorzugsweise 0 bis 300, insbesondere 0 bis 200,
- d: 10 bis 500 vorzugsweise 15 bis 400, insbesondere 20 bis 300,
sind, mit der Maßgabe, dass
- c: < 0,45 (c + d), ist.

Die mit der Formel (I) beschriebenen Polyether können gegebenenfalls durch das Verfahren der Pfropfpolymerisation weiter modifiziert werden. Dazu werden die Polyether in Gegenwart radikalischer Aktivatoren mit Doppelbindungen tragenden Monomeren umgesetzt. Durch die Einstellung des Pfropfungsgrades und die Menge und Art der eingesetzten Monomeren bzw. durch die Verfahrensweise zur Herstellung der Mischpolymerisate ist es möglich die Eigenschaften der Polyether gezielt zu verändern. Geeignete Monomere sind zum Beispiel Methylmethacrylat, Acrylsäure, Styrol oder Maleinsäureanhydrid. Ein derartiges Verfahren wird zum Beispiel in der Auslegeschrift DE-1111 394 beschrieben. Die in dieser Literatur beschriebenen Polyether können auch erfindungsgemäß verwendet werden, wenn sie statistisch mindestens eine OH-und/oder NH₂- und/oder NH-Funktion tragen. Der Inhalt der oben angeführten Literatur und Patentliteratur zur chemischen Charakterisierung der Polyether wird daher hiermit als Referenz eingeführt und gilt als Teil des Offenbarungsgehaltes der vorliegenden Anmeldung.

Spezielle Beispiele für geeignete hydrophile Polyether sind:

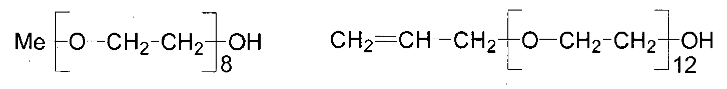

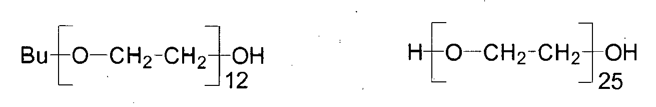

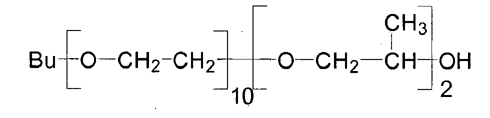

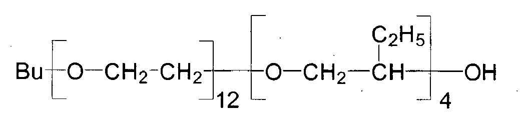

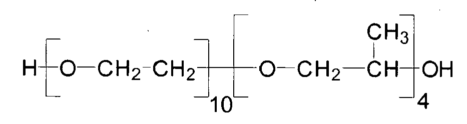

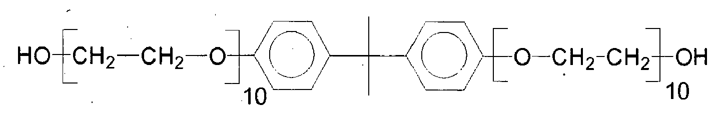

Spezielle Beispiele für geeignete hydrophobe Polyether sind:

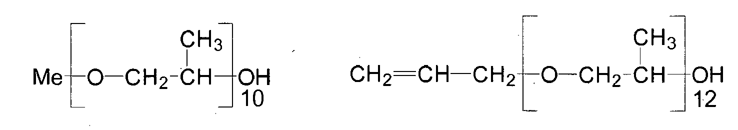

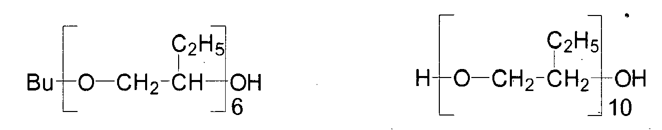

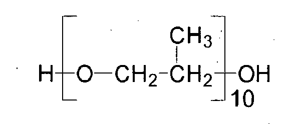

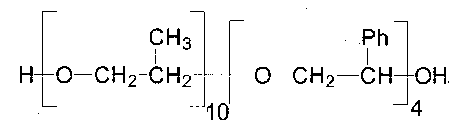

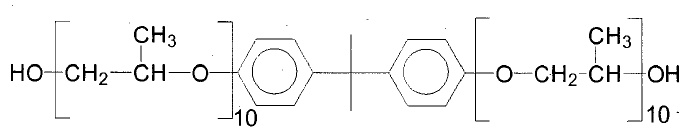

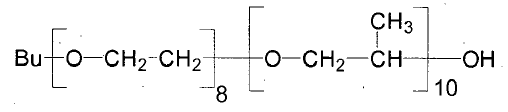

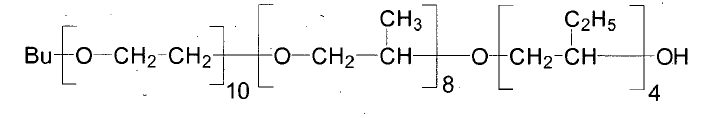

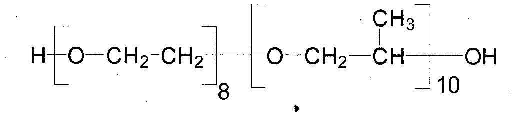

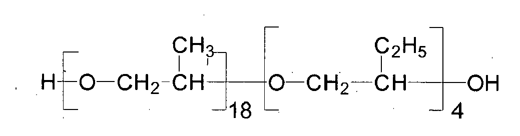

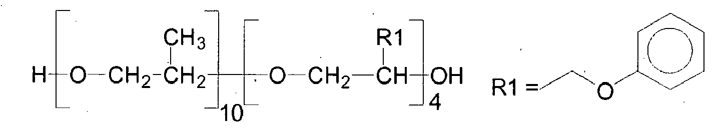

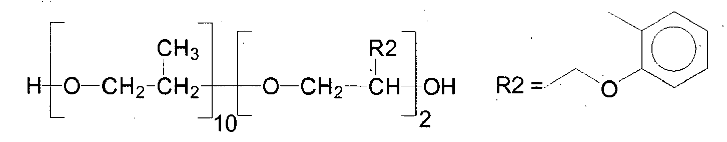

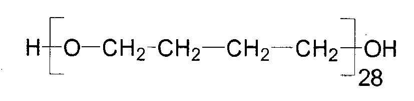

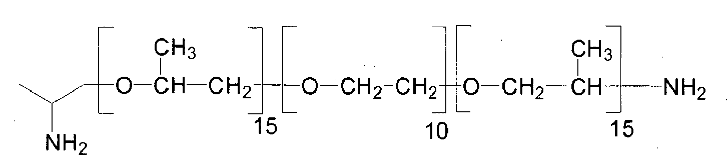

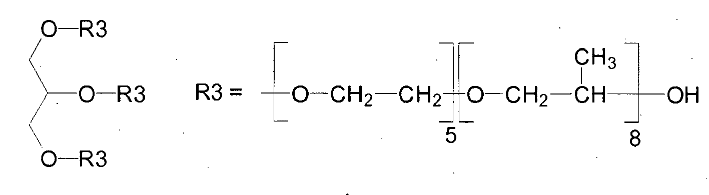

Weitere Verbindungen (c) die mindestens eine OH- und/oder NH₂- und/oder NH-Funktion und/oder andere isocyanatreaktive Gruppen wie Carbonsäure- oder Epoxid-Funktionen tragen sind zum Beispiel, Polyether, die nicht zu den oben aufgeführten erfindungsgemäß verwendeten hydrophilen oder hydrophoben Polyethern a) und b) zählen, einwertige Alkohole, wie Methanol, Ethanol, Fettalkohole, Poly-(ethylen-co-1,2-butylen)-monool, fluorierte Alkohole wie C₆F₁₃-CH₂CH₂OH, Alkylphenole, oder mehrwertige Alkohole, wie 1,2-Propandiol, 1,6-Hexandiol, Poly-(ethylen-co-1,2-butylen)-diol, Poly-(hexamethylen-carbonat)-diol, Glucose, Fructose, Polyglycerin, Polyestermonoole oder Polyesterdiole, wie Poly-(caprolacton)-diol oder Poly-(hexamethylenphthalat)-diol oder fluorierte Polyether.

Weitere geeignete Verbindungen (c) sind zum Beispiel fettsäuremodifizierte Alkohole. Dabei handelt es sich um zwei oder mehrwertige Alkohole, bei denen die OH-Funktionen teilweise verestert sind.

Weitere geeignete Verbindungen sind primäre und sekundäre Amine mit aktiven Wasserstoffatomen, wie zum Beispiel Ethylamin, 1,6-Hexamethylendiamin, Diethylentriamin, Polyethylenimin oder zum Beispiel Poly-(acrylsäurenitril-co-butadien) mit Amin-Endgruppen.

Weitere geeignete Verbindungen (c) sind zum Beispiel fettsäuremodifizierte Amine. Dabei handelt es sich um zwei oder mehrwertige Amine, bei denen die Amingruppen teilweise amidisiert sind.

Außerdem eignen sich Alkholamine, wie zum Beispiel Diethanolamin oder Ethanolamin. Auch hier können die OH- bzw. die Aminfunktionen teilweise verestert bzw. amidisiert vorliegen.

Um die Oberflächenaktivität der Stabilisatoren zu erhöhen können auch als weitere Reaktionspartner Alkohol- oder AminFunktionen tragende organomodifizierte Siloxane eingesetzt werden. Geeignete Beispiele sind zum Beispiel OH-funktionelle Siloxane wie:

HO-(CH₂)₃-SiMe₂O-(SiMe₂O)₁₀-SiMe₂-(CH₂)₃-OH

oder Aminosiloxane, wie zum Beispiel:

H₂N-(CH₂)₃-SiMe₂O-(SiMe₂O)₁₀-SiMe₂-(CH₂)₃-NH₂

oder Polyethersiloxane, wie zum Beispiel:

HO-(CH(CH₃)CH₂O)₈-(CH₂)₃-SiMe₂O-(SiMe₂O)₂₀-SiMe₂-(CH₂)₃-(OCH₂-CH(CH₃))₈-OH.

Um als Polyurethan-Schaumstoffstabilisator brauchbar zu sein, müssen die hydrophilen und hydrophoben Polyalkylenblöcke in einem ausgewogenen Verhältnis vorliegen, wobei auch der Aufbau der verschiedenen Blöcke von großer Bedeutung ist. Es gibt daher für den Aufbau eines möglichst wirksamen Schaumstabilisators eine Vielzahl von Varianten.

Die Umsetzung verschiedener Polyether mit multifunktionellen Isocyanaten erlaubt das genaue Einstellen des Verhältnisses von hydrophilen zu hydrophoben Strukturelementen durch die Wahl der Menge und der Art an hydrophilen und hydrophoben Polyethern. Des Weiteren lassen sich durch das Einbringen weiterer Alkohole oder Amine gezielt andersartige diverse hydrophobe oder hydrophile Strukturelemente einbringen. Zum Beispiel bildet sich bei der Verwendung von 1,6-Hexandiol ein hdyrophober Alkylenblock und durch den Einsatz von Dimethylolpropansäure ein Strukturelement mit einer Carbonsäurefunktionalität.

Zudem lassen sich durch die Ausnutung von Reaktivitätsunterschieden zwischen verschiedenen Isocyanat-Funktionen in einem multifunktionellen Isocyanat bestimmte Strukturen bevorzugt bilden. Zum Beispiel durch die Bildung von Prepolymeren zur Bildung bestimmter Block- oder verzweigter Strukturen.

Gleiches erlaubt die Ausnutzung von Reaktivitätsunterschieden verschiedener OH-, NH₂- oder NH-Funktionen.

Vorhersagen über Wirksamkeit eines Schaumstabilisators können nur in gewissem Maße gegeben werden. Der Fachmann ist deshalb genötigt, die Variationsmöglichkeiten weitgehend empirisch zu erproben.

Die erfindungsgemäßen Polyether-Stabilisatoren besitzen neben einem ausgeprägten Emulgiervermögen auch ein hohes Schaumstabilisierungspotential und sind damit hervorragend als Polurethanschaumstabilisator geeignet. Insbesondere gilt dies für Polyesterweichschaumstoffe und Polyurethan- sowie Polyisocyuanurat-Hartschaumstoffe.

### Ausführungsbeispiele:

Nachfolgende Beispiele sollen zur Verdeutlichung der Erfindung dienen, sie stellen jedoch keinerlei Einschränkung dar.

### Beispiel 1 (LE 4944):

84 g eines hydrophoben Polyetherdiols (M = ca. 2.200 g/mol, w(EO) = 10 %) wurden mit 55 g eines hydrophilen Polyethermonools (M = 2.000 g/mol, w(EO) = 100 %) gemischt und 11 g Isophorondiisocyanat versetzt. Diese Mischung wurde auf 90 °C aufgeheizt und schließlich mit 0,15 g Dibuthylzinnlaurat versetzt. Anschließend wurde noch 4 Stunden bei dieser Temperatur gerührt.

### Beispiel 2 (LE 4950): Linear mit IDPI

66 g eines hydrophoben Polyetherdiols (M = ca. 2.200 g/mol, w(EO) = 10 %) wurden mit 24 g eines hydrophilen Polyethermonools (M = 1.100 g/mol, w(EO) = 100 %) gemischt und 10 g Methylen-diphenylisocyanat versetzt. Diese Mischung wurde auf 90 °C aufgeheizt und schließlich mit 0,1 g Dibuthylzinnlaurat versetzt. Anschließend wurde noch 4 Stunden bei dieser Temperatur gerührt.

### Beispiel 3 (GP-J-139): Verzweigt mit Desmodur N 3300

34 g eines hydrophoben Polyethermonools (M = ca. 1.800 g/mol, w(EO) = 0 %) wurden mit 30 g eines hydrophoben Polyetherdiols (M = ca. 2.200 g/mol, w(EO) = 10 %) und 25 g eines hydrophilen Polyethermonools (M = 2.000 g/mol, w(EO) = 95 %) gemischt und 11 g Desmodur N 3.300 (technisches dreifach funktionelles Isocyanat der Firma Bayer AG), versetzt. Anschließend wurden noch 100 g Propylencarbonat zugesetzt. Diese Mischung wurde auf 90 °C aufgeheizt und schließlich mit 0,1 g Dibuthylzinnlaurat versetzt. Anschließend wurde noch 4 Stunden bei dieser Temperatur gerührt.

### Vergleichsbeispiel 4:

Als Vergleichsbeispiel wurde Pluronic 10400 (A-B-A-Blockpolyether der Firma BASF AG) verwendet. Der Massenanteil an Ethylenoxid-Einheiten beträgt 40 %.

### Vergleichsbeispiel 5: Vorosurf 504

Als weiteres Vergleichsbeispiel wurde Vorosurf 504 (A-B-A-Blockpolyether aus Buthylenoxid und Ethylenoxid der Firma DOW) verwendet.

Für den folgenden Vergleich wurden Polyurethanhartschaumstoffe in einer 50 x 25 x 5 cm großen, auf 60 °C temperierten, verschließbaren metallischen Form durch eine Handverschäumung einer Polyurethanformulierung mit folgenden Bestandteilen produziert:

| | |
|---|---|
| 100,00 pphp* | modifiziertes aromatisches Polyesterpolyol (180 mg KOH/g) |
| 8,00 pphp | KOSMOS 75 (Goldschmidt GmbH) |
| 1,00 pphp | Kosmos 33 (Goldschmidt GmbH) |
| 0,50 pphp | TEGOAMIN PMDETA (Goldschmidt GmbH) |
| 0,70 pphp | Wasser |
| 2,00 pphp | Schaumstabilisator |
| 10,00 pphp | Tris-(2-chloroisopropyl)-phosphat |
| 19,00 pphp | n-Pentan |
| 180,00 pphp | Diphenylmethan-diisocyanat, Isomere u. Homologe (Isocyanatgehalt: 31), |

| | |
|---|---|
| *pphp = parts per hundred parts | |

Die erhaltenen Hartschaumstoffe wurden im Rahmen einer visuellen Beurteilung bezüglich der Oberflächenbeschaffenheit, Innenstörungen und Zellfeinheit untersucht. Weiterhin wurde die mittlere Wärmeleitfähigkeit (K-Faktor) durch Wärmeleitfähigkeitsmessung mit Hilfe einer Wärmeflussmessung in einem Temperaturgradienten (36 °C/10 °C) bestimmt.

Im Folgenden werden die Ergebnisse, die mit den erfindungsgemäßen Polyether-Coplymerisaten erzielt worden sind, mit denen von kommerziell verfügbaren Si-freien Emulgatoren verglichen.

| Stabilisator | Oberfächenstörungen - oben - | Oberfächenstörungen - unten - | Innenstörungen | Zellfeinheit | Wärmeleitfähigkeit/[mW/mK] |
|---|---|---|---|---|---|
| Beispiel 1 | schwach | mittelstark | mittelstark | sehr fein | 22,5 |
| Beispiel 2 | schwach | mittelstark | mittelstark | sehr fein | 22,4 |
| Beispiel 3 | schwach | Mittelstark | mittelstark | sehr fein | 22,7 |
| Vergleichsbeispiel 4 | stark | extrem stark | mittelstark | fein | 30,1 |
| Vergleichsbeispiel 5 | schwach | stark | mittelstark | sehr fein | 22,9 |

Wie aus der oben stehenden Tabelle ersichtlich wird, eignen sich die beanspruchten Verbindungen als Schaumstabilsatoren zur Herstellung von Hartschaumstoffen. Charakteristisch ist das ausgesprochen hohe Stabilisierungspotential der urethanhaltigen Polyether, die insbesondere in der Bodenzone in Relation zu den Vergleichsbeispielen zu einer signifikanten Verbesserung der Oberflächenbeschaffenheit führen. Vermutlich ist neben dem guten Emulgier- auch das hohe Pentan-Haltevermögen dieser Verbindungen für das deutlich geringer ausgeprägte Störungsbild verantwortlich. Weiterhin zeigen die Hartschaumstoffe dieser Beispiele im Vergleich zum Vergleichsbeispiel 4 feinere Zellstrukturen, die zu signifikant verbesserten Wärmeleitfähigkeiten führen.

## Patentansprüche

1. Verwendung von Urethan- oder Harnstoffgruppen enthaltenden Polyethern als Schaumstabilisatoren, erhalten durch die Umsetzung von
A. mindestens einem Isocyanat mit
B.
a) mindestens einem hydrophilen Polyether, der statistisch mindestens eine OH- und/oder NH₂-und/oder NH-Funktion trägt und
(b) mindestens einem hydrophoben Polyether, der statistisch mindestens eine OH- und/oder NH₂- und/oder NH-Funktion trägt und gegebenenfalls
(c) weiteren Verbindungen, die mindestens eine OH- und/oder NH₂-. und/oder NH-Funktion und/oder andere isocyanat-reaktive Gruppen wie Carbonsäure- oder Epoxid-Funktionen tragen,
mit der Maßgabe, dass mindestens ein Isocyanat A. ≥ difunktionell ist.

2. Verwendung von Urethan- oder Harnstoffderivaten nach Anspruch 1 als PU-Schaumstabilisator, **dadurch gekennzeichnet, dass** als Komponente a) mindestens ein Polyether der allgemeinen Formel (I) eingesetzt wird
(R¹)ₐ[R²[(E)_{c}-(P)_{d}-R³]_{b}]ₑ (I)
wobei
R¹ bei a = 1, e-funktuionelle nicht reaktive Anteile eines Initiators,
R² unabhängig voneinander O, NR⁴, NH oder N,
Eeine Ethoxy-Funktion, vorzugsweise der Rest -(CH₂-CH₂-O),
P gleiche oder verschiedene Alkoxy-Funktion(en) mit mindestens drei Kohlenstoffatomen,
R³ gleiche oder verschiedene Reste aus der Gruppe H, -C_{f}H_{2f}-N(R⁴)H und -C_{f}H_{2f}-NH₂,
R⁴ gleiche oder verschiedene Alkyl- oder Aryl-Funktionen mit 1 bis 20 Kohlenstoffatomen, bevorzugt Methyl, Ethyl oder Phenyl,
a 0 oder 1,
b 1, 2 oder 3,
c 10 bis 500,
d 0 bis 330,
e 1 bis 10,
f 2 bis 5,
sind, mit der Maßgabe, dass
c > 0,6 (c + d), ist.

3. Verwendung von Urethan- oder Harnstoffderivaten nach Anspruch 1 und 2 als Schaumstabilisator, **dadurch gekennzeichnet, dass** als Komponente b) mindestens ein Polyether der allgemeinen Formel (I) eingesetzt wird, wobei
c 0 bis 400,
d 10 bis 500,
sind, mit der Maßgabe, dass
c. < 0,45 (c + d), ist.

4. Verwendung von Urethan- oder Harnstoffderivaten nach Anspruch 1 und 2 als Schaumstabilisator, **dadurch gekennzeichnet, dass** als Komponente a) mindestens ein Polyether der allgemeinen Formel (I) eingesetzt wird, wobei
c 15 bis 400,
d 0 bis 200,
e 2 bis 8, ist.

5. Verwendung von Urethan- oder Harnstoffderivaten nach Anspruch 1 und 2 als Schaumstabilisator, **dadurch gekennzeichnet, dass** als Komponente a) mindestens ein Polyether der allgemeinen Formel (I) eingesetzt wird,'wobei
c 20 bis 300,
d 0 bis 100,
e 2 bis 4, ist.

6. Verwendung von Urethan- oder Harnstoffderivaten nach Anspruch 1 und 2 als Schaumstabilisator, **dadurch gekennzeichnet, dass** als Komponente b) mindestens ein Polyether der allgemeinen Formel (I) eingesetzt wird, wobei.
c 0 bis 300,
d 15 bis 400,
e 2 bis 8, ist.

7. Verwendung von Urethan- oder Harnstoffderivaten nach Anspruch 1 und 2 als Schaumstabilisator, **dadurch gekennzeichnet, dass** als Komponente b) mindestens ein Polyether der allgemeinen Formel (I) eingesetzt wird, wobei
c 0 bis 200,
d 20 bis 300,
e 2 bis 4, ist.

8. Verwendung von Urethan- oder Harnstoffderivaten nach Anspruch 1 und 2 als Schaumstabilisator, **dadurch gekennzeichnet, dass** als Komponente a) mindestens ein Polyether der Formeln 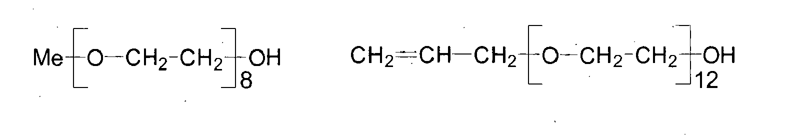 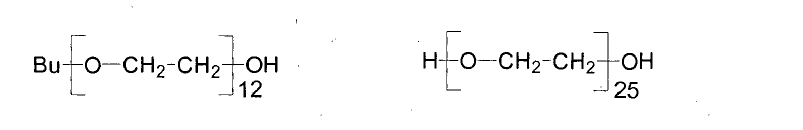 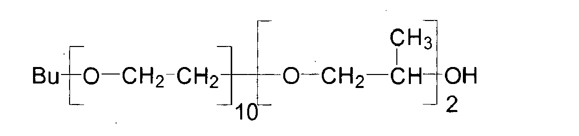 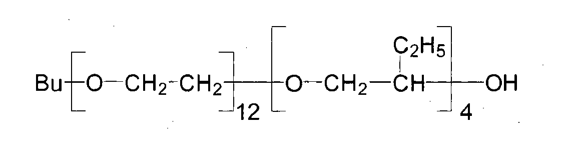 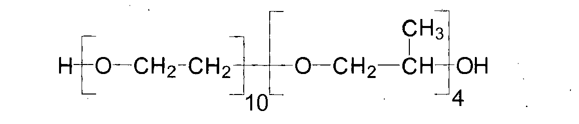 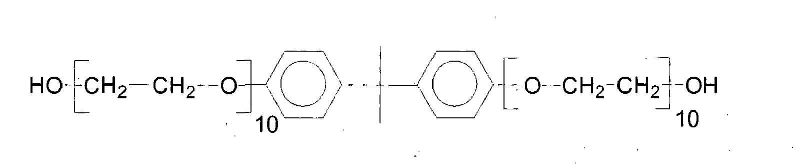 eingesetzt wird.

9. Verwendung von Urethan- oder Harnstoffderivaten nach Anspruch 1 und 2 als Schaumstabilisator, **dadurch gekennzeichnet, dass** als Komponente b) mindestens ein Polyether der Formeln 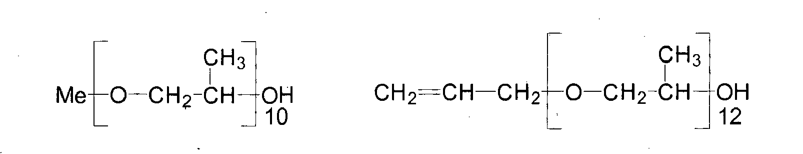 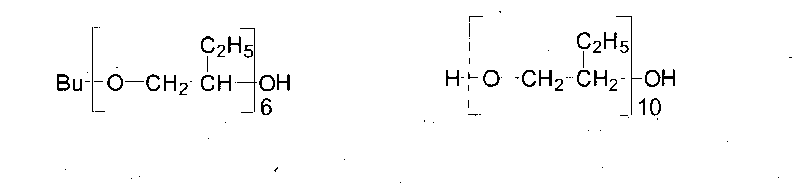 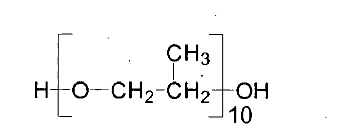 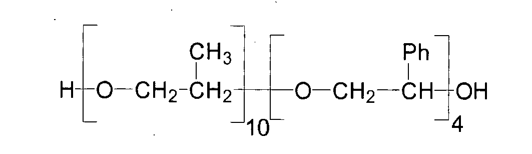 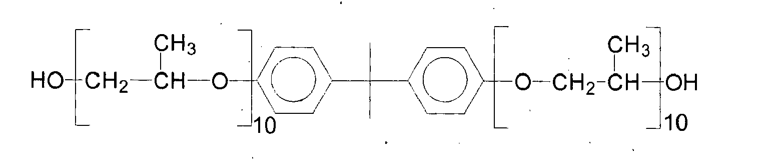 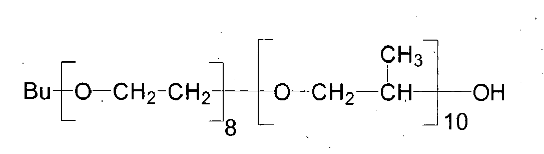 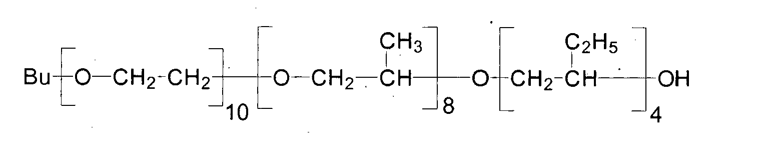 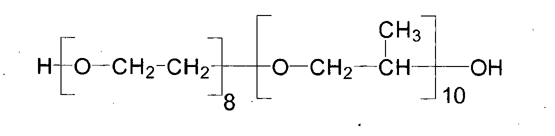 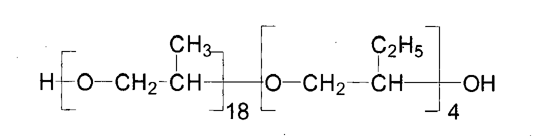 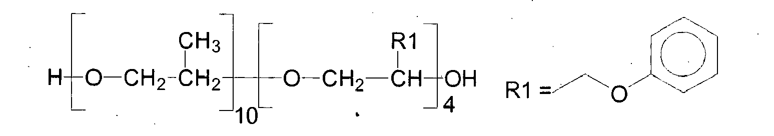 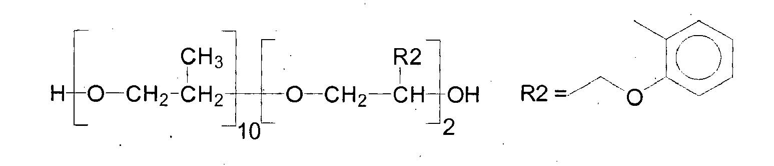 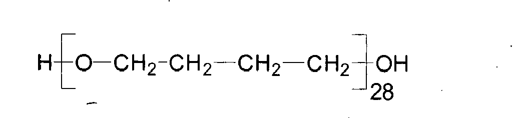 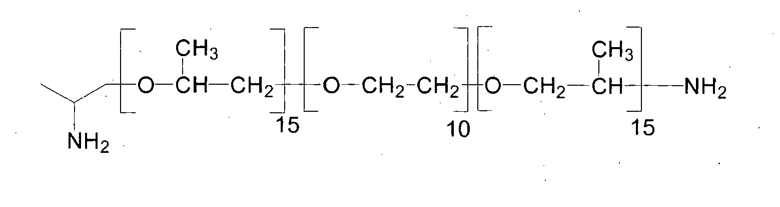 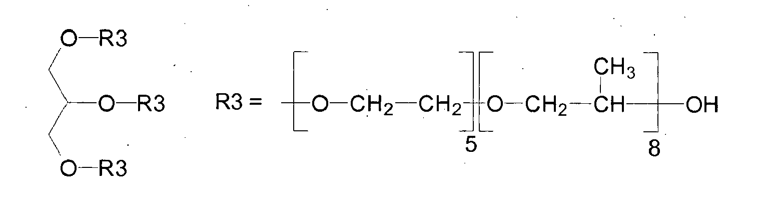 eingesetzt wird.

10. Verwendung von Urethan- oder Harnstoffderivaten nach Anspruch 1 und 2 als Schaumstabilisator, **dadurch gekennzeichnet, dass** als Komponente c) Polyesterdiole eingesetzt werden.

## Claims

1. Use of polyethers containing urethane or urea groups as foam stabilizers, obtained by reacting
A. at least one isocyanate with
B.
(a) at least one hydrophilic polyether which statistically carries at least one OH and/or NH₂ and/or NH function and
(b) at least one hydrophobic polyether which statistically carries at least one OH and/or NH₂ and/or NH function and optionally
(c) further compounds which carry at least one OH and/or NH₂ and/or NH function and/or other isocyanate-reactive groups, such as carboxyl or epoxide functions,
with the proviso that at least one isocyanate A. is ≥ difunctional.

2. Use of urethane or urea derivatives according to Claim 1 as a PU foam stabilizer, **characterized in that** at least one polyether of the general formula (I)
(R¹)ₐ[R²[(E)_{c}-(P)_{d}-R³]_{b}]ₑ (I)
in which,
R¹, in the case of a = 1, is an e-functional nonreactive moiety of an initiator,
R², independently of one another, are O, NR⁴, NH or N,
E is an ethoxy function, preferably the radical - (CH₂-CH₂-O) ,
P are identical or different alkoxy function(s) having at least three carbon atoms,
R³ are identical or different radicals from the group consisting of H, -C_{f}H_{2f}-N(R⁴)H and -C_{f}H_{2f}-NH₂,
R⁴ are identical or different alkyl or aryl functions having 1 to 20 carbon atoms, preferably methyl, ethyl or phenyl,
a is 0 or 1,
b is 1, 2 or 3,
c is from 10 to 500,
d is from 0 to 330,
e is from 1 to 10,
f is from 2 to 5,
with the proviso that
c> 0.6 (c + d),
is used as component a).

3. Use of urethane or urea derivatives according to Claims 1 and 2 as a foam stabilizer, **characterized in that** at least one polyether of the general formula (I), in which
c is from 0 to 400,
d is from 10 to 500,
with the proviso that
c< 0.45 (c + d),
is used as component b).

4. Use of urethane or urea derivatives according to Claims 1 and 2 as a foam stabilizer, **characterized in that** at least one polyether of the general formula (I), in which
c is from 15 to 400,
d is from 0 to 200,
e is from 2 to 8,
is used as component a).

5. Use of urethane or urea derivatives according to Claims 1 and 2 as a foam stabilizer, **characterized in that** at least one polyether of the general formula (I), in which
c is from 20 to 300,
d is from 0 to 100,
e is from 2 to 4,
is used as component a).

6. Use of urethane or urea derivatives according to Claims 1 and 2 as a foam stabilizer, **characterized in that** at least one polyether of the general formula (I), in which
c is from 0 to 300,
d is from 15 to 400,
e is from 2 to 8,
is used as component b).

7. Use of urethane or urea derivatives according to Claims 1 and 2 as a foam stabilizer, **characterized in that** at least one polyether of the general formula (I), in which
c is from 0 to 200,
d is from 20 to 300,
e is from 2 to 4,
is used as component b).

8. Use of urethane and urea derivatives according to Claims 1 and 2 as a foam stabilizer, **characterized in that** at least one polyether of the formulae 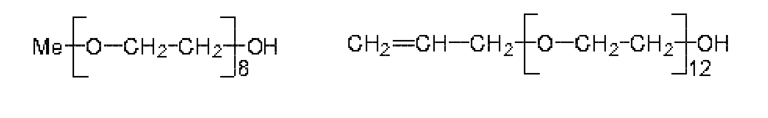 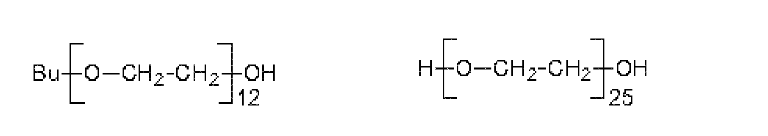 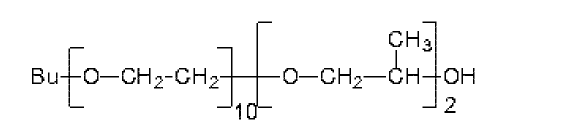 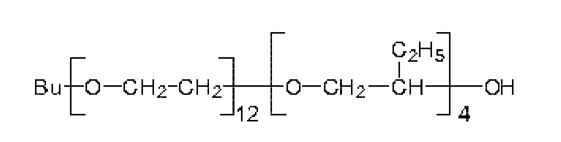 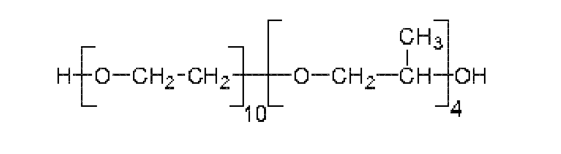 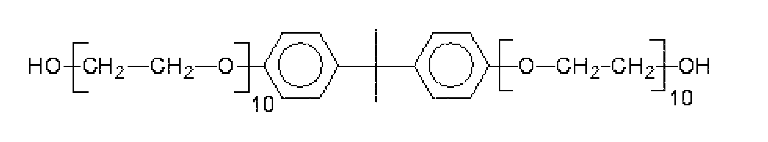 is used as component a).

9. Use of urethane or urea derivatives according to Claims 1 and 2 as a foam stabilizer, **characterized in that** at least one polyether of the formulae 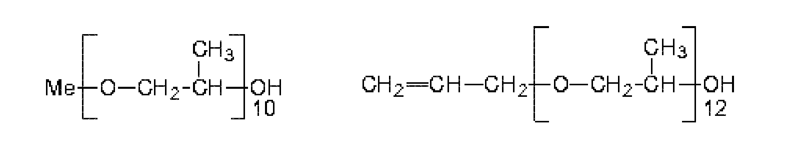 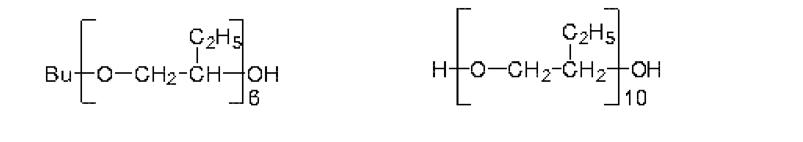 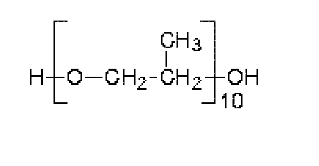 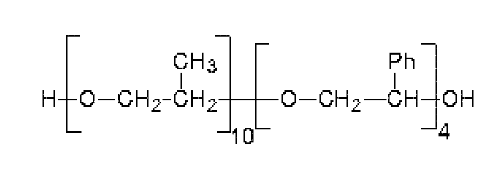 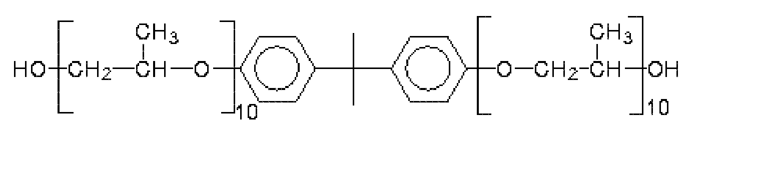 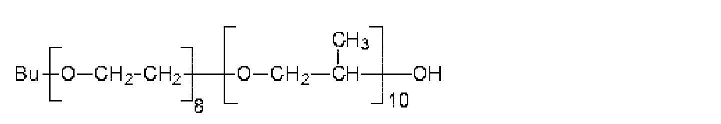 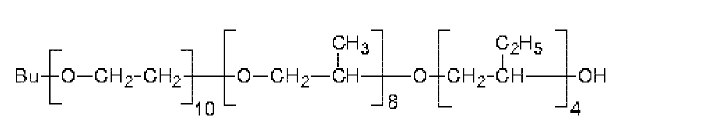 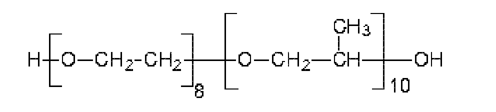 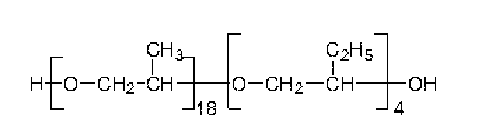 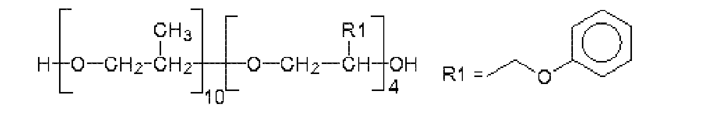 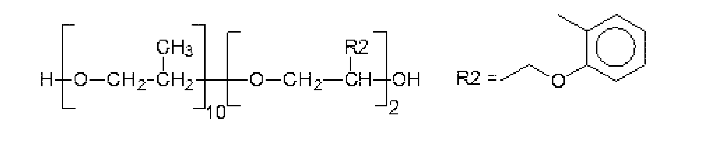 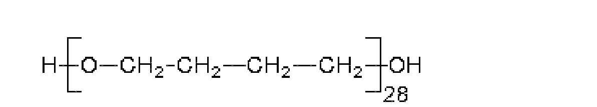 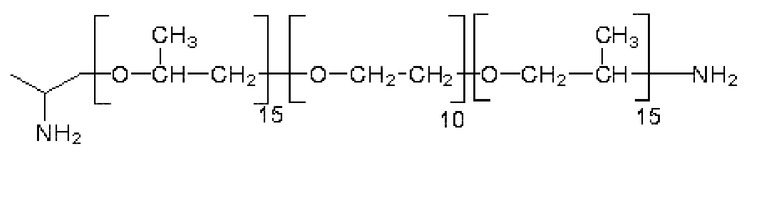 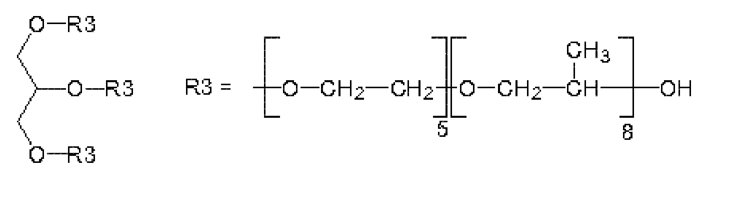 is used as component b).

10. Use of urethane or urea derivatives according to Claims 1 and 2 as a foam stabilizer, **characterized in that** polyesterdiols are used as component c).

## Revendications

1. Utilisation de polyéthers contenant des groupes uréthane ou urée en tant que stabilisateurs de mousse, obtenus par mise en réaction de
A. au moins un isocyanate avec
B.
(a) au moins un polyéther hydrophile, qui porte statistiquement au moins une fonction OH et/ou NH₂ et/ou NH, et
(b) au moins un polyéther hydrophobe, qui porte statistiquement au moins une fonction OH et/ou NH₂ et/ou NH, et éventuellement
(c) d'autres composés, qui portent au moins une fonction OH et/ou NH₂ et/ou NH et/ou d'autres groupes réactifs avec les isocyanates tels que des fonctions acide carboxylique ou époxyde,
à condition qu'au moins un isocyanate A. soit ≥ bifonctionnel.

2. Utilisation de dérivés d'uréthane ou d'urée selon la revendication 1 en tant que stabilisateur de mousse de PU, **caractérisée en ce qu'**on utilise en tant que composant a) au moins un polyéther de formule générale (I)
(R¹)ₐ[R²[(E)_{c}-(P)_{d}-R³]_{b}]ₑ (I)
dans laquelle
R¹ représente, avec a = 1, des fractions e-fonctionnelles non réactives d'un initiateur,
R² représente, indépendamment, O, NR⁴, NH ou N,
E représente une fonction éthoxy, de préférence le radical - (CH₂-CH₂-O) ,
P représente une ou plusieurs fonctions alcoxy identiques ou différentes contenant au moins trois atomes de carbone,
R³ représente des radicaux identiques ou différents du groupe H, -C_{f}H_{2f}-N(R⁴) H et -C_{f}H_{2f}-NH₂,
R⁴ représente des fonctions alkyle ou aryle identiques ou différentes contenant 1 à 20 atomes de carbone, de préférence méthyle, éthyle ou phényle,
a représente 0 ou 1,
b représente 1, 2 ou 3,
c représente 10 à 500,
d représente 0 à 330,
e représente 1 à 10,
f représente 2 à 5,
à condition que
c > 0, 6 (c+d) .

3. Utilisation de dérivés d'uréthane ou d'urée selon les revendications 1 et 2 en tant que stabilisateur de mousse, **caractérisée en ce qu'**on utilise en tant que composant b) au moins un polyéther de formule générale (I), dans laquelle
c représente 0 à 400,
d représente 10 à 500,
à condition que
c < 0,45(c+d).

4. Utilisation de dérivés d'uréthane ou d'urée selon les revendications 1 et 2 en tant que stabilisateur de mousse, **caractérisée en ce qu'**on utilise en tant que composant a) au moins un polyéther de formule générale (I), dans laquelle
c représente 15 à 400,
d représente 0 à 200,
e représente 2 à 8.

5. Utilisation de dérivés d'uréthane ou d'urée selon les revendications 1 et 2 en tant que stabilisateur de mousse, **caractérisée en ce qu'**on utilise en tant que composant a) au moins un polyéther de formule générale (I), dans laquelle
c représente 20 à 300,
d représente 0 à 100,
e représente 2 à 4.

6. Utilisation de dérivés d'uréthane ou d'urée selon les revendications 1 et 2 en tant que stabilisateur de mousse, **caractérisée en ce qu'**on utilise en tant que composant b) au moins un polyéther de formule générale (I), dans laquelle
c représente 0 à 300,
d représente 15 à 400,
e représente 2 à 8.

7. Utilisation de dérivés d'uréthane ou d'urée selon les revendications 1 et 2 en tant que stabilisateur de mousse, **caractérisée en ce qu'**on utilise en tant que composant b) au moins un polyéther de formule générale (I), dans laquelle
c représente 0 à 200,
d représente 20 à 300,
e représente 2 à 4.

8. Utilisation de dérivés d'uréthane ou d'urée selon les revendications 1 et 2 en tant que stabilisateur de mousse, **caractérisée en ce qu'**on utilise en tant que composant a) au moins un polyéther des formules

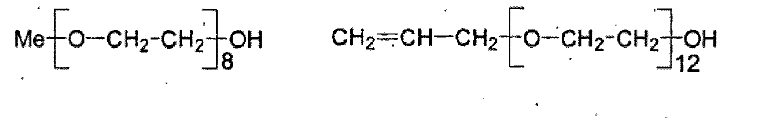

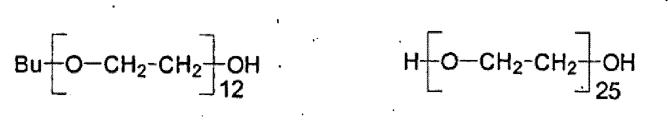

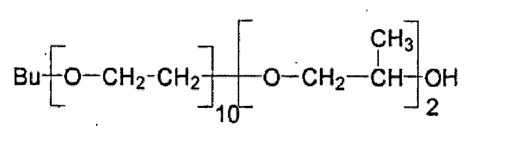

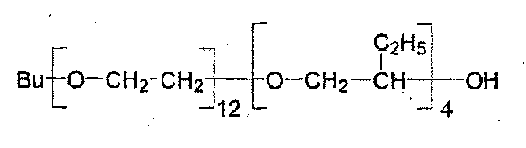

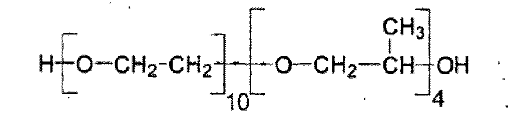

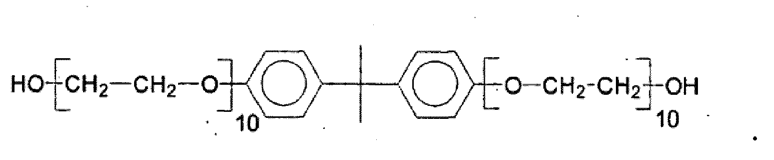

9. Utilisation de dérivés d'uréthane ou d'urée selon les revendications 1 et 2 en tant que stabilisateur de mousse, **caractérisée en ce qu'**on utilise en tant que composant b) au moins un polyéther des formules

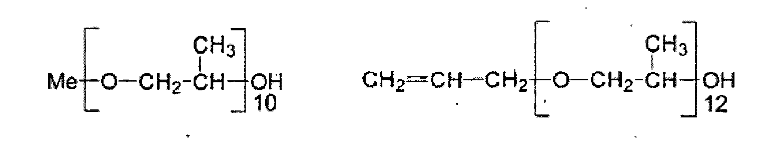

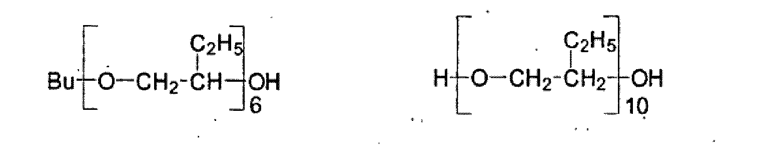

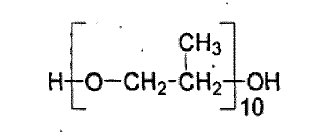

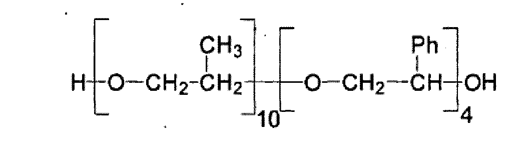

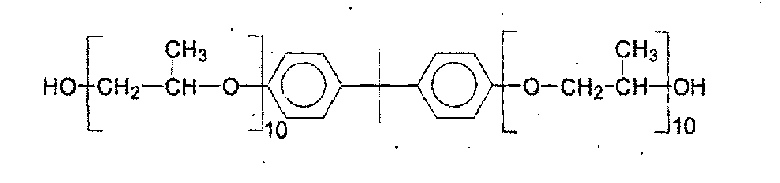

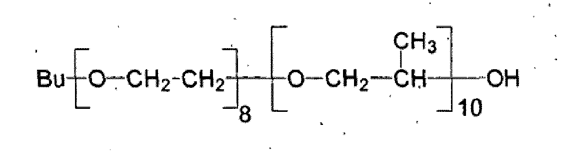

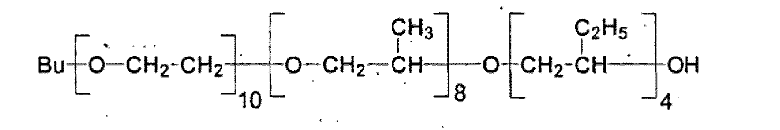

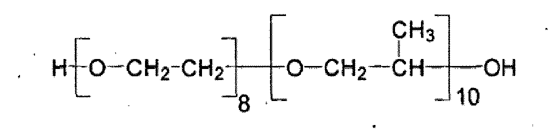

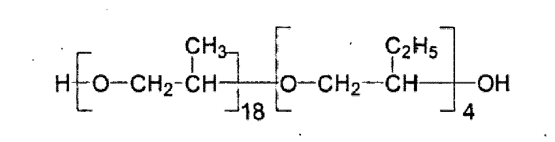

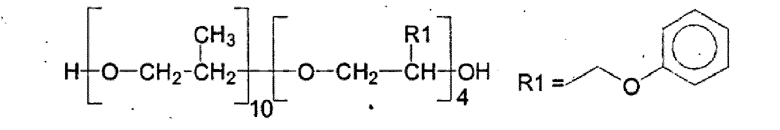

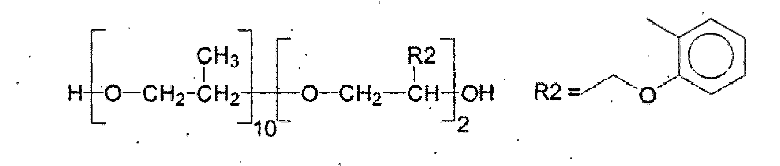

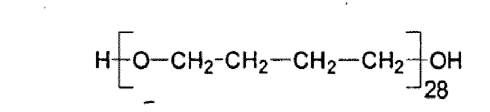

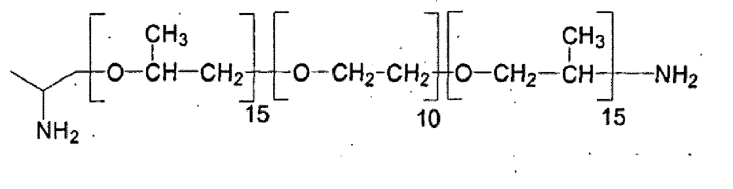

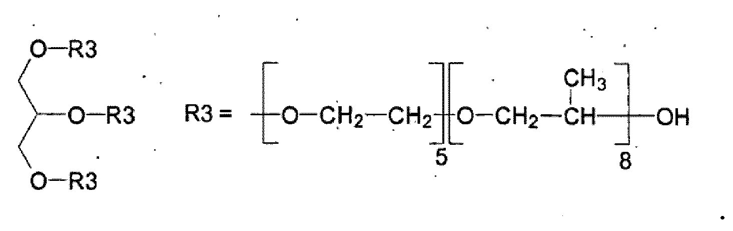

10. Utilisation de dérivés d'uréthane ou d'urée selon les revendications 1 et 2 en tant que stabilisateur de mousse, **caractérisée en ce qu'**on utilise des polyesterdiols en tant que composant c).
